# EUROPEAN PATENT APPLICATION

(11) **EP 4 342 670 A1**
(43) Date of publication of application: **27.03.2024**
(21) Application number: 21949110.7
(22) Date of filing: 18.11.2021
(51) Int. Cl.: B32B 27/32, B32B 27/18, B32B 33/00, B32B 37/12, C08L 23/00

(54) **ARTIFICIAL LEATHER AND MANUFACTURING METHOD THEREFOR**

(30) Priority: 08.07.2021 CN 202110774241; 08.07.2021 CN 202110774079; 08.07.2021 CN 202110774192; 08.07.2021 CN 202110774564; 08.07.2021 CN 202110774653; 08.07.2021 CN 202110774656; 08.07.2021 CN 202110774739
(71) Applicant: Shanghai Hiuv New Materials Co., Ltd., Shanghai 200120 (CN); Shanghai Hiuv Applied Materials Technology Co., Ltd., Shanghai 201508 (CN)
(72) Inventor: LI, Min, Shanghai 200120 (CN); LIU, Yun, Shanghai 200120 (CN)
(74) Representative: Grey, Ian Michael
(86) International application number: PCT/CN2021/131505
(87) International publication number: WO 2023/279625

(57) **Abstract**

The present application relates to an artificial leather and a manufacturing method therefor. The artificial leather comprises a substrate layer; a polyolefin elastomer composite layer, and a polyurethane resin solution layer, wherein the polyolefin elastomer composite layer is provided on a surface of the substrate layer, and the polyolefin elastomer composite layer comprises at least one foamed layer and at least one modification layer, and the polyurethane resin solution layer is provided on a surface of the polyolefin elastomer composite layer away from the substrate layer.

## Description

### CROSS-REFERENCE TO RELATED APPLICATION

This application claims priority to the Chinese patent application No. 202110774241.1, filed on July 8, 2021, entitled "Radiation cross-linked polyolefin elastomer artificial leather with high peeling property", the entire content of which is incorporated herein by reference.

This application claims priority to the Chinese patent application No. 202110774079.3, filed on July 8, 2021, entitled "Low-odor rubber-containing polyolefin artificial leather", the entire content of which is incorporated herein by reference.

This application claims priority to the Chinese patent application No. 202110774192.1, filed on July 8, 2021, entitled "Ultra-soft radiation cross-linked foamed polyolefin elastomer artificial leather", the entire content of which is incorporated herein by reference.

This application claims priority to the Chinese patent application No. 202110774564.0 entitled "High interfacial adhesion multilayer structured leather" filed on July 8, 2021, the entire content of which is incorporated herein by reference.

This application claims priority to the Chinese patent application No. 202110774653.5, filed on July 8, 2021, entitled "Environmentally friendly leather suitable for fine grain", the entire content of which is incorporated herein by reference.

This application claims priority to the Chinese patent application No. 202110774656.9, entitled "Graffiti resistant polyurethane coating", filed on July 8, 2021, the entire content of which is incorporated herein by reference.

This application claims priority to the Chinese patent application No. 202110774739.8, entitled "Graffiti resistant leatherette paper", filed on July 8, 2021, the entire content of which is incorporated herein by reference.

### TECHNICAL FIELD

The present application relates to the technical field of materials, and more specifically, to an artificial leather and a manufacturing method therefor.

### BACKGROUND

As people's living level is getting higher and higher, more and more high quality requirements are putting forward to daily necessities. As one of the daily necessities, in recent years, not only the market demand for leather is increasing, but also in order to meet the needs of customers, the various requirements put forward for leather (including environmental performance, inherent physical strength, durability, solvent resistance, and the like) are also increasingly high. Due to the fact that leather produces a lot of pollution during its manufacturing process, as well as there are inherent shortcomings such as high production cost, relatively poor durability, relatively low surface physical properties, and maintenance difficulty, it is not possible to satisfy people's high quality potential needs any more. From the beginning of the development of artificial leather to the present, because of its relatively excellent performance, relatively low cost and other advantages, it has been used in a large number of shoes, bags, sofas, garments and other fields of manufacturing, and the artificial leather industry has become the pillar industry of light industry.

At present, the entire structure of artificial leather is built on the substrate layer of polyurethane (PU) or polyvinyl chloride (PVC) as a main body, and its production process uses a large number of organic solvents and plasticizers, such as dimethylformamide, methyl ethyl ketone, acetone, toluene, ethyl acetate, and o-phenylene plasticizers, etc., which are extremely hazardous to human body or environment.

According to the disclosed technical content, it is known that artificial leather can be used with ethylene vinyl acetate copolymer (EVA) as a substrate structure, and the artificial leather has good resilience, suppleness, aging resistance and other performances, and has the advantages of being friendly to the environment, simple process, low cost, and the like. etc., but its high odor restricts its use range.

### SUMMARY

The present application provides an artificial leather, which has low odor and is soft to the touch, has good resilience, and has a relatively low cost.

In a first aspect, the present application provides an artificial leather comprising:
a substrate layer;
a polyolefin elastomer composite layer, provided on a surface of the substrate layer, and comprising at least one foamed layer and at least one modification layer, the polyolefin elastomer composite layer being radiation cross-linked; and
a polyurethane layer, provided on a surface of the polyolefin elastomer composite layer away from the substrate layer.

In embodiments of the present application, the substrate layer of the artificial leather is provided with the polyolefin elastomer composite layer that has been subjected to radiation cross-linking, and the polyolefin elastomer composite layer is odorless and has excellent aging resistance and processing performance, so as to enable the artificial leather of the present application to have low odor, good aging resistance, and be easy to process and manufacture. Moreover, the polyolefin elastomer composite layer comprises at least one foamed layer and at least one modification layer, in which the foamed layer can make the artificial leather feel soft and have good resilience, and will also reduce its production cost, and the modification layer can, on the one hand, protect the foamed layer, and, on the other hand, improve performances of the artificial leather, such as aging resistance, UV yellowing resistance, wear resistance, and other performance. Thus, the artificial leather of the present application is further characterized by the above-mentioned excellent properties. In addition, the polyurethane layer is provided on the surface of the polyolefin elastomer composite layer, which can function to decorate and protect the polyolefin elastomer composite layer.

In some embodiments of the present application, the foamed layer has a cross-linking degree of 15%-90%.

In some embodiments of the present application, the foamed layer has raw material components including, by weight,
100 parts of a first polyolefin elastomer;
1 part to 15 parts of a blowing agent;
0 parts to 100 parts, preferably 50 parts to 100 parts of a first rubber elastomer;
0 parts to 10 parts, preferably 2 parts to 10 parts of a blowing promoter; and
a first additive and a first filler, wherein the first additive comprises 0.05 parts to 20 parts of a first cross-linking aid.

In some embodiments of the present application, the modification layer has raw material components including, by weight,
100 parts of a second polyolefin elastomer;
0 parts to 100 parts, preferably 50 parts to 100 parts of a second rubber elastomer; and
0 parts to 10 parts, preferably 6 parts to 10 parts of a first tackifying resin.

In some embodiments of the present application, the first polyolefin elastomer and the second polyolefin elastomer have a melting point of 96°C or less;
the first polyolefin elastomer and the second polyolefin elastomer have a Shore A hardness of below 91.

In some embodiments of the present application, the first polyolefin elastomer and the second polyolefin elastomer are at least one selected from polyethylene, a copolymer of ethylene and alpha olefin, polypropylene, and a copolymer of propylene and alpha olefin.

In some embodiments of the present application, the first rubber elastomer and the second rubber elastomer each are at least one selected from natural rubber, binary ethylene-propylene rubber, trinary ethylene-propylene rubber, styrene-butadiene-styrene block copolymer, styrene-isoprene-styrene block copolymer, cis-butadiene rubber, styrene-butadiene rubber, hydrogenated styrene-butadiene-styrene block copolymer, and hydrogenated styrene-isoprene- styrene block copolymer.

In some embodiments of the present application, the polyurethane layer is a solvent-borne, aqueous or solvent-free polyurethane coating.

In some embodiments of the present application, the polyurethane coating has raw material components including, by weight,
100 parts of a polyurethane resin solution;
1 part to 10 parts of silicone; and
0.2 parts to 2.2 parts of a second cross-linking aid; and
a second additive, wherein the second additive comprises a chain extender, a thickener, a film-forming agent, a slip agent, a wetting agent, or a combination thereof.

In some embodiments of the present application, the polyurethane resin solution is obtained by carrying out a polymerization reaction of a polyisocyanate and a polyol as raw materials, wherein the polyol comprises at least one of a polyol, a polyol polyoxyalkyl ether, or a polyol ester having a hydroxyl group as a terminal group, and wherein the hydroxyl group on the terminal group of the polyol is attached with carbon atoms of more than 6.

In some embodiments of the present application, the silicone has one of an epoxy group, an alkenyl group, or an acrylate group as its terminal group.

In some embodiments of the present application, the second cross-linking aid comprises a second co-cross-linking agent and a cross-linking promoter, optionally the second co-cross-linking agent is a compound containing a plurality of functionalities, and the cross-linking promoter comprises at least one of an organotin and a metal oxide.

In some embodiments of the present application, the second co-cross-linking agent is selected from at least one of diallylamine, diallyl sulfide, N,N-methylenebisacrylamide, glycol dimethacrylate, triallylcyanurate, triallylisocyanurate, trimethylolpropane trimethacrylate, tetrahydroxymethylmethane tetracrylate.

In some embodiments of the present application, the substrate layer is fabric or paper.

In some embodiments of the present application, the fabric is at least one selected from pile fabrics, flat fabrics, polyester fabrics, nylon fabrics, microfiber base fabrics, stretch fabrics, and nonwoven fabrics.

In some embodiments of the present application, the artificial leather has a total thickness of 0.21 mm to 13.1 mm;
wherein the substrate layer has a thickness of 0.1 mm to 6.0 mm;
the polyolefin elastomer composite layer has a thickness of 0.1 mm to 7.0 mm; and
the polyurethane layer has a thickness of 0.01 mm to 0.10 mm.

In some embodiments of the present application, the artificial leather further comprises:
a polyolefin elastomer bonding layer, provided between the polyolefin elastomer composite layer and the substrate layer, the polyolefin elastomer bonding layer being radiation cross-linked.

In some embodiments of the present application, the polyolefin elastomer bonding layer has a cross-linking degree of 1% to 90%.

In some embodiments of the present application, the polyolefin elastomer bonding layer has raw material components including, by weight:
0 parts to 100 parts, preferably 60 parts to 100 parts of a third polyolefin elastomer;
0 parts to 100 parts, preferably 10 parts to 100 parts of a graft-modified polyolefin elastomer, wherein a sum of parts by weight of the third polyolefin elastomer and parts by weight of the graft-modified polyolefin elastomer is 100 parts;
0.5 parts to 40 parts of a second tackifying resin;
1 part to 10 parts of a third cross-linking aid; and
a second filler and second additive.

In some embodiments of the present application, the graft-modified polyolefin elastomer is grafted with a (meth) acrylate salt.

In some embodiments of the present application, the (meth) acrylate salt is at least one selected from sodium (meth)acrylate, lithium (meth)acrylate, and zinc (meth)acrylate.

In some embodiments of the present application, the graft-modified polyolefin elastomer is further grafted with at least one selected from acrylic acid, maleic anhydride, glycidyl methacrylate, methyl acrylate, methyl methacrylate, butyl acrylate, and (meth)acrylic acid monomer.

In some embodiments of the present application, the first tackifying resin and the second tackifying resin each comprise at least one of rosin and its derivatives, terpene resins, polymeric resins, dicyclopentadiene and condensation resins.

In some embodiments of the present application, the first tackifying resin and the second tackifying resin have a softening point of ≤ 120°C.

In some embodiments of the present application, the artificial leather has a cross-linking degree of 20% to 90%.

In a second aspect, the present application provides a method of manufacturing an artificial leather comprising:
providing a polyolefin elastomer composite layer on a surface of a substrate layer, the polyolefin elastomer composite layer comprising at least one foamed layer and at least one modification layer;
providing a polyurethane layer on a surface of the polyolefin elastomer composite layer away from the substrate layer, and then performing embossing and radiation cross-linking treatment, thereby obtaining the artificial leather.

In embodiments of the present application, the manufacturing process is simple and low cost. Moreover, the radiation cross-linking treatment is used in the manufacturing method, so that the artificial leather produced has more excellent temperature resistance, aging resistance and solvent resistance.

In some embodiments of the present application, the providing a polyolefin elastomer composite layer on a surface of a substrate layer comprises:
providing the substrate layer;
mixing raw material components of the foamed layer and raw material components of the modification layer, respectively, and forming a foaming film and the modification layer through co-extrusion;
stacking the foaming film and the modification layer respectively to the surface of the substrate layer;
subjecting the foaming film on the surface of the substrate layer to a foaming treatment, thereby forming a polyolefin elastomer composite layer on the surface of the substrate layer.

In some embodiments of the present application, the providing a polyolefin elastomer composite layer on a surface of a substrate layer comprises:
providing a polyolefin elastomer bonding layer on the surface of the substrate layer; and
providing the polyolefin elastomer composite layer on the surface of the polyolefin elastomer bonding layer away from the substrate layer.

In some embodiments of the present application, the radiation cross-linking is carried out by means of alpha rays, beta rays, gamma rays, X-rays or neutron rays.

### DESCRIPTION OF THE DRAWINGS

In order to explain the technical solutions of the embodiments of the present application more clearly, the following will briefly introduce the drawings that need to be used in the embodiments of the present application or the prior art. Obviously, the drawings described below are only some embodiments of the present application. A person of ordinary skill in the art can obtain other drawings based on the drawings without creative work.
FIG. 1 shows a structure schematic diagram of an artificial leather according to some embodiments of the present application;
FIG. 2 shows a structure schematic diagram of an artificial leather according to some other embodiments of the present application.

Reference numerals in the specific embodiments are labeled as follows:
10-Substrate layer;
20-Polyolefin elastomer composite layer;
21- Foamed layer;
22-Modification layer;
30-Polyurethane layer;
40-Polyolefin elastomer bonding layer.

### DETAILED DESCRIPTION

The examples or embodiments in this disclosure are described in a progressive scheme, with each example focusing on its differences from other examples, and the same and similar portion of each example can be referred to each other.

In this disclosure, the description referring to the terms "an embodiment", "some embodiments", "illustrative embodiment", "exemplary", "specific example", or "some examples" means that specific features, structures, materials, or characteristics described in conjunction with an embodiment or example are included in at least one embodiment or example of the present invention. In this disclosure, the illustrative expressions of the above terms do not necessarily refer to the same embodiments or examples. Moreover, the specific features, structures, materials, or characteristics described may be combined in any one or more embodiments or examples in a suitable manner.

Furthermore, the terms "first" and "second" are used for descriptive purposes only and are not to be construed as indicating or implying relative importance or implicitly specifying the number of technical features indicated. Thus, a feature defined with the terms "first", "second" may expressly or impliedly include at least one such feature. In the description of the present application, "plurality" means at least two, such as two, three, and the like, unless otherwise expressly and specifically limited.

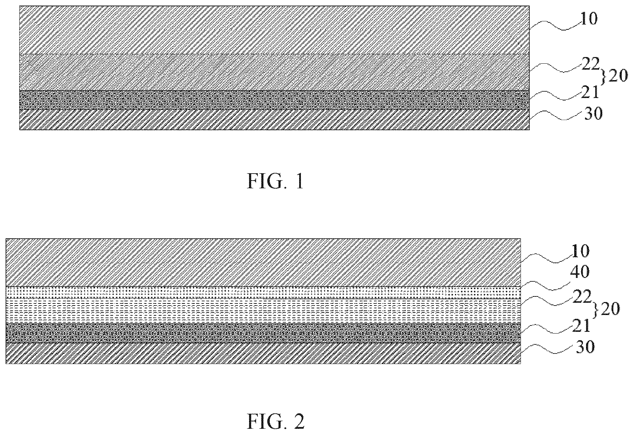

As shown in FIG. 1, the present application provides an artificial leather comprising a substrate layer 10, a polyolefin elastomer composite layer 20, and a polyurethane layer 30, wherein the polyolefin elastomer composite layer 20 is disposed on a surface of the substrate layer 10, and the polyolefin elastomer composite layer 20 comprises at least one foamed layer 21 and at least one modification layer 22, wherein the polyolefin elastomer composite layer 20 is subjected to radiation cross-linking. The polyurethane layer 30 is provided on the surface of the polyolefin elastomer composite layer 20 away from the substrate layer 10.

In embodiments of the present application, the substrate layer 10 of the artificial leather is provided with the polyolefin elastomer composite layer 20 that has been subjected to radiation cross-linking, and the polyolefin elastomer composite layer 20 is odorless and has excellent aging resistance and processing performance, so as to enable the artificial leather of the present application to have low odor, good aging resistance, and be easy to process and manufacture. Moreover, the polyolefin elastomer composite layer 20 comprises at least one foamed layer 21 and at least one modification layer 22, in which the foamed layer 21 can make the artificial leather feel soft and have good resilience, and will also reduce its production cost, and the modification layer 22 can, on the one hand, protect the foamed layer 21, and, on the other hand, improve performances of the artificial leather, such as aging resistance, UV yellowing resistance, wear resistance, and other performance. Thus, the artificial leather of the present application is further characterized by the above-mentioned excellent properties. In addition, the polyurethane layer 30 is provided on the surface of the polyolefin elastomer composite layer 20, which can function to decorate and protect the polyolefin elastomer composite layer.

As described above, the foamed layer 21 may improve softness and resilience of the artificial leather, wherein a cross-linking degree and a blowing rate of the foamed layer 21 are closely related to improvement of the softness and resilience of the artificial leather. Therefore, in some embodiments of the present application, the cross-linking degree of the foamed layer 21 is set in the range of 15%-90%, and the blowing rate is set from 1.2 times to 10 times.

Exemplarily, the cross-linking degree of the foamed layer 21 may be, but not limited to, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, or 90%.

In order to obtain a foamed layer with the above cross-linking degree in embodiments, it is possible to aid with radiation, thereby obtaining the cross-linked foamed layer. In addition, the cross-linking degree of the foamed layer can be adjusted by a radiation dose. In some embodiments of the present application, the radiation cross-linking may be carried out by α-rays, β-rays, γ-rays, X-rays or neutron rays, and the radiation dose is from 5 KGY to 200 KGY, and preferably, the radiation dose is from 10 KGY to 100 KGY.

Exemplarily, the blowing rate of the foamed layer 21 may be, but is not limited to, 1.2 times, 1.3 times, 1.4 times, 1.5 times, 1.6 times, 1.7 times, 1.8 times, 1.9 times, 2.0 times, 2.1 times, 2.2 times, 2.3 times, 2.4 times, 2.5 times, 2.6 times, 2.7 times, 2.8 times, 2.9 times, 3.0 times, 3.1 times, 3.2 times, 3.3 times, 3.4 times, 3.5 times, 3.6 times, 3.7 times, 3.8 times, 3.9 times, 4.0 times, 4.1 times, 4.2 times, 4.3 times, 4.4 times, 4.5 times, 4.6 times, 4.7 times, 4.8 times, 4.9 times, 5.0 times, 5.1 times, 5.2 times, 5.3 times, 5.4 times, 5.5 times, 5.6 times, 5.7 times, 5.8 times, 5.9 times, 6.0 times, 6.1 times, 6.2 times, 6.3 times, 6.4 times, 6.5 times, 6.6 times, 6.7 times, 6.8 times, 6.9 times, 7.0 times, 7.1 times, 7.2 times, 7.3 times, 7.4 times, 7.5 times, 7.6 times, 7.7 times, 7.8 times, 7.9 times, 8.0 times, 8.1 times, 8.2 times, 8.3 times, 8.4 times, 8.5 times, 8.6 times, 8.7 times, 8.8 times, 8.9 times, 9.0 times, 9.1 times, 9.2 times, 9.3 times, 9.4 times, 9.5 times, 9.6 times, 9.7 times, 9.8 times, 9.9 times, or 10.0 times.

In order to obtain the above foamed layer in embodiments, in some embodiments of the present application, the foamed layer 21 has raw material components including, by weight,
100 parts of a first polyolefin elastomer;
1 part to 15 parts of a blowing agent;
0 parts to 100 parts, preferably 50 parts to 100 parts of a first rubber elastomer;
0 parts to 10 parts, preferably 2 parts to 10 parts of a blowing promoter; and
a first additive and a first filler, wherein the first additive comprises 0.05 parts to 20 parts of a first co-cross-linking agent.

The first polyolefin elastomer has a melting point of 96°C or less and a Shore A hardness of 91 or less. The first polyolefin elastomer being within the above melting point and Shore A hardness facilitates the formation of a clear grain pattern.

In some embodiments of the present application, the first polyolefin elastomer is selected from a copolymer and/or a homopolymer having olefin as a monomer. By way of specific example, the first polyolefin elastomer may be at least one selected from polyethylene, a copolymer of ethylene and an alpha olefin, polypropylene, a copolymer of propylene and an alpha olefin.

In embodiments of the present application, there is no specific limitation on the blowing agent, which may be a physical blowing agent, a chemical blowing agent, or a microsphere blowing agent.

Exemplarily, the physical blowing agent includes, but not limited to, nitrogen (N₂), carbon dioxide (CO₂), pentane, hexane, and trichlorotrifluoroethane.

Exemplarily, the chemical blowing agent includes, but not limited to, azodicarbonamide (AC), azodiisobutyronitrile, N,N-dinitrosopentamethylenetetetramine (DPT), 4,4-disulfonylhydrazine diphenyl ether (OBSH), and p-phenylsulfonylhydrazine.

In some embodiments of the present application, the blowing agent may be at least one selected from an ADC blowing agent, an OBSH blowing agent, and a bicarbonate salt blowing agent.

In some embodiments of the present application, the first rubber elastomer is an organic compound containing unsaturated bonds, such as an olefin containing a double bond, so that a foam layer 21 and a polyolefin elastomer composite layer 20 with a suitable cross-linking degree can be obtained. Exemplarily, the first rubber elastomer may be at least one selected from natural rubber (NR), binary ethylene-propylene rubber (EPM), trinary ethylene-propylene rubber (EPDM), styrene-butadiene-styrene block copolymer (SBS), styrene-isoprene-styrene block copolymer (SIS), cis-butadiene rubber, styrene-butadiene rubber, hydrogenated styrene-butadiene block copolymer (SEBS), hydrogenated styrene-butadiene-styrene block copolymer, and hydrogenated styrene-isoprene- styrene block copolymer.

In some embodiments of the present application, the foaming prompter may be at least one selected from zinc stearate, zinc oxide and zinc carbonate.

In the embodiments provided in the present application, there is no specific limitation on the composition and parts of the first additive and the first filler, which are the conventional compositions and addition amounts known to those skilled in the art.

In some embodiments of the present application, the first additive may be selected as a co-cross-linking agent, an antioxidant, a colorant, or a combination thereof. Each of the above additives is added in an appropriate amount capable of realizing its intended function, such as from 0.1 part to 20 parts.

The co-cross-linking agent may improve the cross-linking degree of the foamed layer 21, and the amount added thereof can be adjusted according to the actual situation. In some embodiments of the present application, based on 100 parts by weight of the first polyolefin elastomer, the first additive comprises a first co-cross-linking agent in an addition amount of 20 parts or less.

Further, the first co-cross-linking agent may be at least one selected from diallylamine, diallyl sulfide, N,N-dimethyl-bisacrylamide, glycol dimethacrylate, triallylcyanurate, triallylisocyanurate, trimethylolpropane trimethacrylate, tetrahydroxymethyl methane tetraacrylate.

In some embodiments of the present application, the first filler as raw material components in the foamed layer 21 may be at least one selected from calcium carbonate, limestone, silica, and talc. The addition of the first filler may improve the mechanical properties of the polyolefin elastomer composite layer 20. For example, the first filler is added in an amount of 0 parts to 30 parts, preferably 0.1 parts to 5 parts, based on 100 parts by weight of the first polyolefin elastomer.

In the embodiments provided in the present application, the modification layer 22 in the polyolefin elastomer composite layer 20 is a modification layer having better adhesion, resilience, abrasion resistance, softness, and other properties.

In some embodiments of the present application, the modification layer 22 has raw material components including, by weight,
100 parts of a second polyolefin elastomer;
1 parts to 100 parts, preferably 50 parts to 100 parts of a second rubber elastomer; and
0 parts to 10 parts, preferably 6 parts to 10 parts of a first tracifying resin.

The second polyolefin elastomer has a melting point of 96°C or less and the second polyolefin elastomer has a Shore A hardness of 91 or less. The second polyolefin elastomer being within the above melting point and Shore A hardness facilitates the formation of a clear grain pattern.

In some embodiments of the present application, the second polyolefin elastomer is selected from a copolymer and/or a homopolymer having olefin as a monomer.

Exemplarily, the second polyolefin elastomer may be at least one selected from polyethylene, a copolymer of ethylene and an alpha olefin, polypropylene, a copolymer of propylene and an alpha olefin.

In some embodiments of the present application, the second rubber elastomer is an organic compound containing unsaturated bonds, such as an olefin containing a double bond, so that a polyolefin elastomer composite layer 20 with a suitable cross-linking degree can be obtained.

Exemplarily, the second rubber elastomer may be at least one selected from natural rubber (NR), binary ethylene-propylene rubber (EPM), trinary ethylene-propylene rubber (EPDM), styrene-butadiene-styrene block copolymer (SBS), styrene-isoprene-styrene block copolymer (SIS), cis-butadiene rubber, styrene-butadiene rubber, hydrogenated styrene-butadiene block copolymer (SEBS), hydrogenated styrene-butadiene-styrene block copolymer, and hydrogenated styrene-isoprene-styrene block copolymer.

In the embodiments provided in the present application, the first tackifying resin is used to enhance adhesion between the layers, and the addition amount of the first tackifying resin can be adjusted according to the actual situation.

In some embodiments of the present application, the first tackifying resin comprises at least one of rosin and its derivatives, terpene resins, polymeric resins, dicyclopentadiene, and condensation resins.

Exemplarily, the rosin may be gum rosin, tall oil rosin, wood rosin; the rosin derivative may be a resin acid salt, a resin acid ester, a rosin amine, a rosin anhydride, a rosin alcohol, a hydrogenated rosin, a disproportionalized rosin, a polymerized rosin, an esterified rosin, a maleated rosin; the terpene resin may be an alpha terpene resin, a beta terpene resin, a terpene phenolic resin; and the polymerized resin may be at least one of a C5 petroleum resin, a C9 petroleum resin, a dicyclopentadiene (DCPD) resin, a gumarone-indene resin, and a series of styrene resins; and the condensation resin may be at least one of an alkyl phenolic resin and a xylene resin.

In some embodiments of the present application, the first tackifying resin has a softening point of 120°C or less.

In the embodiments provided in the present application, the polyurethane layer 30 can not only serve as a decorative layer, but also serve as a protective layer to minimize dirt remained on the surface of the artificial leather or to make the surface of the artificial leather easier to clean.

In some embodiments of the present application, the polyurethane layer 30 is stacked to the surface of the modification layer 21 to further protect the polyolefin elastomer composite layer 20.

In some embodiments of the present application, the polyurethane layer 30 may be a solvent-borne, aqueous or solvent-free polyurethane coating.

In some specific embodiments of the present application, the polyurethane layer 30 may be a solvent-free or aqueous polyurethane coating.

In order to make the polyurethane layer 30 more resistant to graffiti, in some embodiments of the present application, the polyurethane coating has raw material components including, by weight,
100 parts of a polyurethane resin solution;
1 part to 10 parts of silicone; and
0.2 parts to 2.2 parts of a second cross-linking aid; and
a second additive, wherein the second additive comprises a chain extender, a thickener, a film-forming agent, a slip agent, a wetting agent, or a combination thereof.

In embodiments of the present application, the polyurethane resin solution and the silicone undergo a cross-linking reaction in the aid of the second cross-linking aid and the second additive to form a three-dimensional network structure, wherein the carbon chains in the polyurethane resin solution may increase the density of the cross-linking network by increasing the density of active cross-linking sites to obtain a homogeneous, tough coating. Moreover, the silicone which functions to resist graffiti is chemically bonded to the polyurethane resin solution so that it is not easily migrated out of the coating, thereby obtaining a polyurethane coating having a better graffiti resistance. In addition, the raw materials for the preparation of the polyurethane coating do not contain small organic molecules having a low boiling point and being volatile, and thus no volatile gas is generated in the polyurethane coating, thereby further reducing the odor of the artificial leather.

In order to obtain the above-described polyurethane coating, the present application provides a method of manufacturing the polyurethane coating, comprising the following steps:
mixing a polyurethane resin solution, silicone, a second cross-linking aid and a second additive at a certain ratio, and then adding a solvent and mixing it to obtain a slurry;
applying the slurry to a substrate, and performing radiation cross-linking after the slurry is dried, thereby obtaining the polyurethane coating of the present application.

In some embodiments of the present application, the polyurethane resin solution is obtained by polymerization reaction of a polyisocyanate and a polyol as raw materials. The polyisocyanate is at least one selected from an aromatic diisocyanate and an aliphatic diisocyanate. Exemplarily, the aromatic diisocyanate may be 4,4'-methylenebisphenyl isocyanate (MDI), m-xylene diisocyanate (XDI), benzene-1,4-diisocyanate, naphthalene-1,5-diisocyanate, and toluene diisocyanate (TDI); the aliphatic diisocyanate may be isophorone diisocyanate (IPDI), hexamethylene diisocyanate (HDI), 1,4-cyclohexyl diisocyanate (CHDI), decane-1,10-diisocyanate, lysine diisocyanate (LDI), 1,4-butane diisocyanate (BDI), and dicyclohexylmethane-4,4'-diisocyanate (H12MDI).

In some embodiments of the present application, the above-described polyol comprises at least one of a polyol, a polyol polyoxyalkyl ether, or a polyol ester having a hydroxyl group as a terminal group, wherein the hydroxyl group on the terminal group of the polyol is attached with carbon atoms of more than 6. It is to be noted herein that a polyol refers to an organic compound containing more than two hydroxyl groups, such as a diol, a triol, and the like.

In embodiments of the present application, the carbon atoms of a soft segment structure in the polyurethane resin molecule are more than 6, and radiation cross-linking can trigger the long carbon chain of the soft segment structure in the polyurethane resin molecule to act as an active cross-linking site, which may be subj ected to a cross-linking reaction with active groups in the silicone to form a three-dimensional network structure. The long carbon chain structure may increase the density of the cross-linking network by increasing the density of active cross-linking sites to obtain a homogeneous, tough coating film. Moreover, the silicone which functions to resist graffiti is chemically bonded to the polyurethane resin solution so that it is not easily migrated out of the coating, thereby obtaining a polyurethane coating having a better graffiti resistance.

In some embodiments of the present application, the polyol is a diol, and the diol may be an aliphatic diol or an alicyclic diol. Exemplarily, the diol may be 1,6-hexanediol, 2,2,4-trimethyl-1,6-hexanediol, 1,10-decanediol, 1,12-octadecanediol, 1,3-cyclohexanediol, 1,4-dihydroxymethylcyclohexane, 1,4-cyclohexanediol, 1,3-dihydroxymethylcyclohexane.

In some embodiments of the present application, the above-described polyol polyoxyalkyl ether can be obtained by an addition polymerization of a starting agent with one or more of ethylene oxide, propylene oxide, and tetrahydrofuran, wherein the starting agent is selected from the diol in the above-described embodiments. That is, the starting agent can be 1,6-hexanediol, 2,2,4-trimethyl-1,6-hexanediol, 1,10-decanediol, 1,12-octadecanediol, 1,3-cyclohexanediol, 1,4-dihydroxymethylcyclohexane, 1,4-cyclohexanediol, 1,3-dihydroxymethylcyclohexane.

In some embodiments of the present application, the above-described polyol ester may be polyethylene adipate, polycaprolactone, polypropylene heptanedioate, polybutylene dodecanedioate, polyhexylene isophthalate, polyethylene cyclohexanedicarboxylate.

In embodiments of the present application, the second cross-linking aid comprises a second co-cross-linking agent and a cross-linking promoter.

Exemplarily, the second co-cross-linking agent is a compound containing a plurality of functionalities, which may contain unsaturated bonds. For example, the second co-cross-linking agent may be at least one selected from triallyl isocyanate, triallyl cyanurate, divinylbenzene, diallylamino, diallyl sulphide, N,N-methylenebisacrylamide, ethylene glycol dimethacrylate, triallyl cyanurate, triallyl isocyanurate, trimethylolpropane trimethacrylate, tetramethylolmethane tetraacrylate.

Exemplarily, the cross-linking promoter may be at least one selected from an organotin and a metal oxide. The organotin may be at least one selected from dibutyltin dilaurate, stannous octoate, and di(dodecylthio)dibutyltin. The metal oxide may be at least one selected from zinc oxide, zirconium oxide, aluminum oxide, and magnesium oxide.

In embodiments of the present application, in addition to the second cross-linking aid, the polyurethane coating may comprise other additives used in coatings that are well known to those skilled in the art, such as one or more of a chain extender, a thickener, a film-forming agent, a slip agent, a wetting agent, a curing agent, and a catalyst.

Exemplarily, the chain extender may be at least one selected from a diol, a diacid, a diamine.

Exemplarily, the thickening agent may be selected from an associative polyurethane-type thickener.

Exemplarily, the film-forming agent may be at least one selected from ethylene glycol, propylene glycol, hexylene glycol, dodecanol ester, ethylene glycol butyl ether, dipropylene glycol monobutyl ether, tripropylene glycol n-butyl ether, and propylene glycol phenyl ether, in order to improve application and leveling properties of the slurry.

Exemplarily, the slip agent may be selected from an organosiloxane emulsion, preferably an anionic, cationic, or nonionic organosilicon microemulsion, which is capable of imparting a slippery handfeel to the artificial leather, and enhancing the waterproofing, mildew-proofing, and wet-scrubbing-resistant properties of the artificial leather, and may be also used for solving the problem of stickiness.

Exemplarily, the wetting agent may be selected from a polyoxyethylene ether-modified silicone to improve penetration performance of the aqueous polyurethane on a substrate.

Each of the above-described additives is added to the polyurethane coating in an appropriate amount capable of accomplishing its intended function. For example, the addition amount of each additive may be 0.1 part to 20 parts by weight relative to 100 parts by weight of the polyurethane resin.

In some embodiments of the present application, the silicone has one of an epoxy group, an alkenyl group, or an acrylate group as a terminal group. Examples include divinyl-terminated phenyl silicones, modified polysiloxanes, and polysiloxanes monocapped with an epoxy group.

In some embodiments of the present application, the substrate layer 10 is fabric or paper. Exemplarily, the fabric is at least one selected from pile fabrics, flat fabrics, polyester fabrics, nylon fabrics, microfiber base fabrics, stretch fabrics, and nonwoven fabrics.

In some embodiments of the present application, the artificial leather has a total thickness of 0.21 mm to 13.1 mm; wherein the substrate layer 10 has a thickness of 0.1 mm to 6.0 mm; the polyolefin elastomer composite layer 20 has a thickness of 0.1 mm to 7.0 mm; and the polyurethane layer has a thickness of 0.01 mm to 0.10 mm.

In order to enhance the adhesion and peel strength between the polyolefin elastomer composite layer 20 and the substrate layer 10, in some embodiments of the present application, the artificial leather further comprises a polyolefin elastomer bonding layer 40, which is provided between the polyolefin elastomer composite layer 20 and the substrate layer 10, as shown in FIG. 2.

In some embodiments of the present application, the polyolefin elastomer bonding layer 40 has a cross-linking degree of 1% to 90%.

In some embodiments of the present application, the polyolefin elastomer bonding layer 40 has raw material components including, by weight:
0 parts to 100 parts, preferably 60 parts to 100 parts of a third polyolefin elastomer;
0 parts to 100 parts, preferably 10 parts to 100 parts of a graft-modified polyolefin elastomer, wherein a sum of parts by weight of the third polyolefin elastomer and parts by weight of the graft-modified polyolefin elastomer is 100 parts;
0.5 parts to 40 parts of a second tackifying resin;
1 part to 10 parts of a third cross-linking aid; and
a second filler.

In some embodiments of the present application, the third polyolefin elastomer is selected from a copolymer and/or a homopolymer having olefin as a monomer.

Exemplarily, the third polyolefin elastomer may be at least one selected from polyethylene, a copolymer of ethylene and an alpha olefin, polypropylene, a copolymer of propylene and an alpha olefin.

In some embodiments of the present application, the graft-modified polyolefin elastomer is grafted with a (meth) acrylate salt.

Exemplarily, the (meth) acrylate salt is at least one selected from sodium (meth)acrylate, lithium (meth)acrylate, and zinc (meth)acrylate.

In some embodiments of the present application, the graft-modified polyolefin elastomer is further grafted with at least one selected from acrylic acid, maleic anhydride, glycidyl methacrylate, methyl acrylate, methyl methacrylate, butyl acrylate, and (meth)acrylic acid monomer in addition to the (meth) acrylate salt.

In the embodiments provided in the present application, the second tackifying resin may enhance the adhesion of the polyolefin elastomer bonding layer 40, and the addition amount of the second tackifying resin may be adjusted according to the actual situation.

In some embodiments of the present application, the second tackifying resin comprises at least one of rosin and its derivatives, terpene resins, polymeric resins, dicyclopentadiene and condensation resins.

Exemplarily, the rosin may be gum rosin, tall oil rosin, wood rosin; the rosin derivative may be a resin acid salt, a resin acid ester, a rosin amine, a rosin anhydride, a rosin alcohol, a hydrogenated rosin, a disproportionalized rosin, a polymerized rosin, an esterified rosin, a maleated rosin; the terpene resin may be an alpha terpene resin, a beta terpene resin, a terpene phenolic resin; and the polymerized resin may be at least one of a C5 petroleum resin, a C9 petroleum resin, a dicyclopentadiene (DCPD) resin, a gumarone-indene resin, and a series of styrene resins; and the condensation resin may be at least one of an alkyl phenolic resin and a xylene resin.

In some embodiments of the present application, the second tackifying resin has a softening point of ≤ 120°C.

In some embodiments of the present application, the second filler as raw material components may be at least one selected from calcium carbonate, limestone, silica, and talc. The addition of the second filler may improve the mechanical properties of the polyolefin elastomer bonding layer 40. For example, the second filler is added in an amount of 0 parts to 30 parts, preferably 0.1 parts to 5 parts, based on 100 parts by weight of the base resin that is the third polyolefin elastomer and/or the graft-modified polyolefin elastomer.

In a second aspect, the present application provides a method of manufacturing an artificial leather, the method comprising:
S10: providing a polyolefin elastomer composite layer on a surface of a substrate layer, the polyolefin elastomer composite layer comprising at least one foamed layer and at least one modification layer; and
S20: providing a polyurethane layer on a surface of the polyolefin elastomer composite layer away from the substrate layer, and then performing embossing and radiation cross-linking treatment, thereby obtaining the artificial leather.

Specifically, in some embodiments of the present application, the step S10 comprises:
S11: providing the substrate layer;
S12: mixing raw material components of the foamed layer and raw material components of the modification layer, respectively, and forming the foaming film and the modification layer through co-extrusion;
S13: stacking the foaming film and the modification layer respectively to the surface of the substrate layer; and
S14: subjecting the foaming film on the surface of the substrate layer to a foaming treatment, thereby forming a polyolefin elastomer composite layer on the surface of the substrate layer.

Specifically, in some embodiments of the present application, the step S20 comprises:
S21: Preparing a slurry for a polyurethane layer, comprising:
   1) adding polyisocyanate and dehydrated polyol to a stirring kettle with stirring until homogeneous, wherein the mixing kettle has a temperature of from 40°C to 60°C, then slowly raising the temperature to 120°C to continue the reaction, and lowering the temperature to 50°C after the reaction is complete;
   2) Adding acetone, silicone, a cross-linking agent, a cross-linking promoter and the second additive with further stirring, and allowing it to react fully;
   3) adding a solvent to adjust viscosity of the system, and obtaining the polyurethane slurry after the reaction is sufficiently complete;
S22: applying the slurry to the surface of the polyolefin elastomer composite layer, and performing a radiation cross-linking after the slurry is dried, wherein the radiation cross-linking is carried out by α-rays, β-rays, γ-rays, X-rays, or neutron rays, thereby obtaining the artificial leather of the present application.

In some embodiments of the present application, the step S10 may comprises:
S11: providing the substrate layer;
S12: mixing raw material components of the foamed layer, raw material components of the modification layer and raw material components of the polyolefin elastomer bonding layer, respectively, and forming the foaming film, the modification layer and the polyolefin elastomer bonding layer through co-extrusion;
S13: stacking the polyolefin elastomer bonding layer, the foaming film and the modification layer respectively to the surface of the substrate layer; and
S14: subj ecting the foaming film on the surface of the polyolefin elastomer bonding layer to a foaming treatment, thereby forming a polyolefin elastomer composite layer on the surface of the polyolefin elastomer bonding layer.

According to embodiments of the present application, the manufacturing process of the artificial leather is simple and low-cost, and the radiation cross-linking treatment is used in the manufacturing method, so that the produced artificial leather has more excellent temperature resistance, aging resistance and solvent resistance.

The artificial leather of the present application and the preparation method thereof are described in detail below by means of specific examples.

### Example 1

In this example, the polyurethane resin solution layer in the artificial leather was a conventional solvent-free polyurethane resin solution slurry formulation, and the polyolefin elastomer composite layer was a two-layer structure including a foamed layer and a modification layer, and the foamed layer was stacked to the substrate layer. The raw materials and their composition of the foamed layer was as shown in Table 1, wherein the blowing agent was ADC blowing agent (Weifang Yaxing L-C2).

The modification layer included the following raw material components by weight:
100 parts of a second polyolefin elastomer (Mitsui Chemicals DF740, with a melting point of 96°C, and a Shore A hardness of 91);
0 parts of a second rubber elastomer (EPDM, Dow 3745P).

The polyurethane layer included the following raw material components by weight:
100 parts of solvent-free polyurethane prepolymer (Asahikawa Chemical XCJ10A);
66.5 parts of a curing agent (Asahikawa Chemical XCJ10B);
0.7 parts of a catalyst (Bayer Chemical T12).

The polyurethane prepolymer had an isocyanate content of 2.3%, and the curing agent had a hydroxyl value of 40 mg KOH/g.

The example of the present application further provided a method of manufacturing an artificial leather, the manufacturing method comprising the following steps:
1) providing the substrate layer;
2) mixing raw material components of the foamed layer and raw material components of the modification layer, respectively, and forming the foaming film, and the modification layer through co-extrusion;
3) stacking the foaming film and the modification layer to the surface of the substrate layer;
4) subjecting the film on the surface of the substrate layer to a foaming treatment, thereby forming a polyolefin elastomer composite layer on the surface of the substrate, wherein the foaming temperature was 100°C-230°C;
5) preparing a polyurethane slurry, comprising:
   adding polyisocyanate and dehydrated polyol to a stirring kettle with stirring until homogeneous, wherein the mixing kettle has a temperature of from 40°C to 60°C, then slowly raising the temperature to 120°C to continue the reaction, and lowering the temperature to 50°C after the reaction is complete;
   adding acetone, silicone, a cross-linking agent, and a cross-linking promoter with further stirring, and allowing it to react fully;
   adding a solvent to adjust viscosity of the system, thereby obtaining the polyurethane slurry after the reaction is sufficiently complete;
6) applying the polyurethane slurry to the surface of the polyolefin elastomer composite layer away from the substrate layer, and then performing embossing and radiation cross-linking treatment, thereby obtaining the artificial leather.

### Example 2

In this example, the polyurethane layer in the artificial leather was the same as the polyurethane layer in Example 1. The polyolefin elastomer composite layer was a two-layer structure including a foamed layer and a modification layer, and the foamed layer was stacked to the substrate layer. The raw materials and their composition of the foamed layer was as shown in Table 1, wherein the blowing agent was ADC blowing agent (Weifang Yaxing L-C2).

The modification layer included the following raw material components by weight:
100 parts of a second polyolefin elastomer (Mitsui Chemicals DF740);
100 parts of a second rubber elastomer (EPDM, Dow 3745P).

The method of manufacturing the artificial leather in this example was the same as that in Example 1.

### Example 3

In this example, the polyurethane layer in the artificial leather was the same as the polyurethane layer in Example 1. The polyolefin elastomer composite layer was a three-layer structure including a first modification layer, a foamed layer and a second modification layer, and the second modification layer was stacked to the substrate layer. The raw materials and their composition of the foamed layer was as shown in Table 1, wherein the blowing agent was ADC blowing agent (Weifang Yaxing L-C2).

The first modification layer included the following raw material components by weight:
100 parts of a second polyolefin elastomer (Mitsui Chemicals DF740);
70 parts of a second rubber elastomer (EPDM, Dow 3745P).

The second modification layer included the following raw material components by weight:
100 parts of a second polyolefin elastomer (Mitsui Chemicals DF740);
6 parts of a first tackifying resin (terpene resin, model T100).

The method of manufacturing the artificial leather in this example was the same as that in Example 1.

### Example 4

In this example, the polyurethane layer in the artificial leather was the same as the polyurethane layer in Example 1. The polyolefin elastomer composite layer was a three-layer structure including a first modification layer, a foamed layer and a second modification layer, and the second modification layer was stacked to the substrate layer. The raw materials and their composition of the foamed layer was as shown in Table 1, wherein the blowing agent was ADC blowing agent (Weifang Yaxing L-C2).

The first modification layer included the following raw material components by weight:
100 parts of a second polyolefin elastomer (Mitsui Chemicals DF740);
50 parts of a second rubber elastomer (EPDM, Dow 3745P).

The second modification layer included the following raw material components by weight:
100 parts of a second polyolefin elastomer (Mitsui Chemicals DF740);
6 parts of a first tackifying resin (terpene resin, model T100).

The method of manufacturing the artificial leather in this example was the same as that in Example 1.

### Example 5

In this example, the first modification layer, the second modification layer and the polyurethane layer slurry formulation in the artificial leather were the same as those in Example 4. The polyolefin elastomer composite layer was a three-layer structure including the first modification layer, the foamed layer and the second modification layer, the second modification layer was stacked to the substrate layer. The raw materials and their composition of the foamed layer was as shown in Table 1, wherein the blowing agent was OBSH blowing agent (Shijiazhuang DuoYi Chemical, OBSH-75).

The manufacturing method of this example was the same as that of Example 4 with the difference in that the foaming temperature was adjusted to be 100° C to 160° C.

### Example 6

In this example, the first modification layer, the second modification layer and the polyurethane layer slurry formulation in the artificial leather were the same as those in Example 4. The polyolefin elastomer composite layer was a three-layer structure including the first modification layer, the foamed layer and the second modification layer, the second modification layer was stacked to the substrate layer. The raw materials and their composition of the foamed layer was as shown in Table 1, wherein the blowing agent was sodium bicarbonate blowing agent (Kunshan Yayang Technology, TR60A).

The manufacturing method of this example was the same as that of Example 4 with the difference in that the foaming temperature was adjusted to be 100° C to 200° C.

### Example 7

The artificial leather in this example was the same as that in Example 4 with the differences in that the first polyolefin elastomer as raw material components of the foamed layer and the second polyolefin elastomer as raw material components of the modification layer were LG Chem LF100, which had a melting point of 96° C and a Shore A hardness of 91.

### Example 8

The artificial leather in this example was the same as that in Example 4 with the differences in that the first polyolefin elastomer as raw material components of the foamed layer and the second polyolefin elastomer as raw material components of the modification layer were Mitsui Chemicals DF640, which had a melting point of less than 50°C and a Shore A hardness of 56.

### Comparative Example 1

The comparative Example was the same as Example 4 with the differences that the resulting artificial leather was not subjected to the foaming and radiation treatment.

### Comparative Example 2

The comparative Example was the same as Example 4 with the differences that the resulting artificial leather was not subjected to the radiation treatment.

The raw material components and contents of the foamed layer in the artificial leather produced by Examples 1-8 of the present application with Comparative Example 1-2 were shown in table 1.

**Table 1**

| Runs | First polyolefin elastomer | First rubber elastomer | Blowing agents | Zinc stearate |
|---|---|---|---|---|
| Example 1 | 100 parts | 0 parts | 1 parts | 0 parts |
| Example 2 | 100 parts | 100 parts | 15 parts | 10 parts |
| Example 3 | 100 parts | 70 parts | 8 parts | 4 parts |
| Example 4 | 100 parts | 50 parts | 4 parts | 2 parts |
| Example 5 | 100 parts | 50 parts | 4 parts | 0 parts |
| Example 6 | 100 parts | 50 parts | 4 parts | 0 parts |
| Example 7 | 100 parts | 50 parts | 4 parts | 2 parts |
| Example 8 | 100 parts | 50 parts | 4 parts | 2 parts |
| Comparative Example 1 | 100 parts | 50 parts | 4 parts | 2 parts |
| Comparative Example 2 | 100 parts | 50 parts | 4 parts | 2 parts |

The thicknesses of the substrate layer, the polyolefin elastomer composite layer, the polyurethane layer, and the total thickness of all three layers in the artificial leathers as well as the radiation dose in Examples 1-8 and Comparative Examples 1-2 were shown in table 2.

**Table 2**

| | Radiation dose /KGY | Substrate layer /mm | Polyolefin elastomer composite layer /mm | | | Polyurethane layer /mm | Total thickness of artificial leather /mm |
|---|---|---|---|---|---|---|---|
| | | | Foamed layer | Modification layer | total | | |
| Example 1 | 5 | 0.1 | 0.08 | 0.02 | 0.1 | 0.01 | 0.21 |
| Example 2 | 200 | 2.2 | 2.5 | 0.5 | 3.0 | 0.1 | 5.3 |
| Example 3 | 50 | 0.6 | 0.86 | 0.02/0.12 | 1.0 | 0.03 | 1.63 |
| Example 4 | 100 | 1.2 | 1.29 | 0.03/0.18 | 1.5 | 0.05 | 2.75 |
| Example 5 | 100 | 1.2 | 1.29 | 0.03/0.18 | 1.5 | 0.05 | 2.75 |
| Example 6 | 100 | 1.2 | 1.29 | 0.03/0.18 | 1.5 | 0.05 | 2.75 |
| Example 7 | 100 | 1.2 | 1.29 | 0.03/0.18 | 1.5 | 0.05 | 2.75 |
| Example 8 | 100 | 1.2 | 1.29 | 0.03/0.18 | 1.5 | 0.05 | 2.75 |
| Comparative Example 1 | 0 | 1.2 | 1.29 | 0.03/0.18 | 1.5 | 0.05 | 2.75 |
| Comparative Example 2 | 0 | 1.2 | 1.29 | 0.03/0.18 | 1.5 | 0.05 | 2.75 |

The cross-linking degree and the Shore hardness of the foamed layer in the artificial leather, and the abrasion resistance of the artificial leather in Examples 1-8 and Comparative Examples 1-2 were shown in table 3 in which the cross-linking degree of the foamed layer was tested in accordance with the xylene extraction method in GB/T 29848-2018-5.5.3, the Shore hardness A of the foamed layer was tested in accordance with GB/T 2411-2008, and the abrasion resistance of the artificial leather was tested in accordance with ASTM D 1242-1995.

**Table 3**

| | Cross-linking degree (%) | Abrasion resistance (number of rubs/22H) | Shore hardness (A) |
|---|---|---|---|
| Example 1 | 15.0 | 75 | 63 |
| Example 2 | 90.0 | 1850 | 35 |
| Example 3 | 66.5 | 255 | 38 |
| Example 4 | 61.3 | 1254 | 42 |
| Example 5 | 50.4 | 1050 | 47 |
| Example 6 | 58.2 | 1128 | 51 |
| Example 7 | 65.9 | 1345 | 59 |
| Example 8 | 55.7 | 1094 | 31 |
| Comparative Example 1 | No cross-linking | 316 | 75 |
| Comparative Example 2 | No cross-linking | 201 | 50 |

### Example 9

This example was the same as that in Example 1 with the differences in the raw material components of the polyurethane layer and their contents and radiation doses, wherein the contents of the raw material components and radiation doses were shown in Table 4.

The example of the present application provided a method of manufacturing an artificial leather, the manufacturing method comprising the following steps:
1) providing the substrate layer;
2) mixing raw material components of the foamed layer and raw material components of the modification layer, respectively, and forming the foaming film, and the modification layer through co-extrusion;
3) stacking the foaming film and the modification layer to the surface of the substrate layer;
4) subjecting the foaming film formed on the surface of the substrate layer to a foaming treatment, thereby forming a polyolefin elastomer composite layer on the surface of the substrate layer, wherein the foaming temperature was 100°C-230°C;
5) preparing a polyurethane slurry, in particular comprising:
   (1) adding diphenylmethane diisocyanate (Wanhua Chemical, MDI-100) and 1,6-hexanediol (BASF, HDO) to a stirring kettle with stirring until homogeneous, wherein the stirring kettle had a temperature of from 40°C to 60°C, then slowly raising the temperature to 120°C to continue the reaction, and lowering the temperature to 50°C after the reaction is complete;
   (2) adding acetone, divinyl-capped phenyl silicone oil (Anhui Aiyota, IOTA253), triallyl isocyanurate (TAIC), zinc oxide, and a second additive (e.g., 0.5 parts to 2 parts of a thickener, 5 parts to 20 parts of a film-forming agent, 0.1 parts to 2 parts of a wetting agent, and 0.3 parts to 5 parts of slipperiness agent) with further stirring, and allowing it to react fully;
   (3) adding a solvent to adjust viscosity of the system, thereby obtaining the polyurethane slurry after the reaction is sufficiently complete;
6) applying the polyurethane slurry to the surface of the polyolefin elastomer composite layer away from the substrate layer, and then performing embossing and radiation cross-linking treatment, thereby obtaining the artificial leather.

### Example 10

This example was the same as that in Example 1 with the differences in the raw material components of the polyurethane layer and their contents and radiation doses, wherein the contents of the raw material components and radiation doses were shown in Table 4.

The polyurethane slurry was prepared by the steps of:
(1) adding toluene diisocyanate (Dow Chemical, VORANATE^{®} T-80) with 1,10-decanediol (Shandong Lisheng Chemical) to a stirring kettle with stirring until homogeneous, wherein the stirring kettle had a temperature of from 40°C to 60°C, then slowly raising the temperature to 120°C to continue the reaction, and lowering the temperature to 50°C after the reaction is complete;
(2) adding acetone, modified polysiloxane (Anhui Aiyota, IOTA2031), triallyl isocyanurate (TAIC), zinc oxide, and a second additive (e.g., 0.5 parts to 2 parts of a thickener, 5 parts to 20 parts of a film-forming agent, 0.1 parts to 2 parts of a wetting agent, and 0.3 parts to 5 parts of slipperiness agent) with further stirring, and allowing it to react fully;
(3) adding a solvent to adjust viscosity of the system, thereby obtaining the polyurethane slurry after the reaction is sufficiently complete.

### Example 11

This example was the same as that in Example 1 with the differences in the raw material components of the polyurethane layer and their contents and radiation doses, wherein the contents of the raw material components and radiation doses were shown in Table 4.

The polyurethane slurry was prepared by the steps of:
(1) adding hexamethylene diisocyanate (BASF, BASONTA^{®}HI 100AP) and diethylene glycol hexyl ether (Dow Chemical, HECB) to a stirring kettle with stirring until homogeneous, wherein the stirring kettle had a temperature of from 40°C to 60°C, then slowly raising the temperature to 120°C to continue the reaction, and lowering the temperature to 50°C after the reaction is complete;
(2) adding acetone, polysiloxanes monocapped with epoxy groups (Anhui Aiyota, IOTA150-4), triallyl isocyanurate (TAIC), zinc oxide, and a second additive (e.g., 0.5 parts to 2 parts of a thickener, 5 parts to 20 parts of a film-forming agent, 0.1 parts to 2 parts of a wetting agent, and 0.3 parts to 5 parts of slipperiness agent) with further stirring, and allowing it to react fully;
(3) adding a solvent to adjust viscosity of the system, thereby obtaining the polyurethane slurry after the reaction is sufficiently complete.

### Example 12

This example was the same as that in Example 1 with the differences in the raw material components of the polyurethane layer and their contents and radiation doses, wherein the contents of the raw material components and radiation doses were shown in Table 4.

The slurry for the polyurethane layer was prepared by the steps of:
(1) adding isophorone diisocyanate (Jinan Weizhen Chemical, IPDI) and polycaprolactone (Jiangsu Renjiang Chemical, PCL) to a stirring kettle with stirring until homogeneous, wherein the stirring kettle had a temperature of from 40°C to 60°C, then slowly raising the temperature to 120°C to continue the reaction, and lowering the temperature to 50°C after the reaction is complete;
(2) adding acetone, divinyl-capped phenyl silicone oil (Anhui Aiyota, IOTA253), triallyl isocyanurate (TAIC), zinc oxide, and a second additive (e.g., 0.5 parts to 2 parts of a thickener, 5 parts to 20 parts of a film-forming agent, 0.1 parts to 2 parts of a wetting agent, and 0.3 parts to 5 parts of slipperiness agent) with further stirring, and allowing it to react fully;
(3) adding a solvent to adjust viscosity of the system, thereby obtaining the polyurethane slurry after the reaction is sufficiently complete.

### Example 13

This example was the same as that in Example 1 with the differences in the raw material components of the polyurethane layer and their contents and radiation doses, wherein the contents of the raw material components and radiation doses were shown in Table 4.

The slurry for the polyurethane layer was prepared by the steps of:
(1) adding toluene cyclohexane-1,4-diisocyanate (Hubei Jinleda Chemical Co., Ltd., CHDI) and 1,6-hexanediol (BASF, HDO) to a stirring kettle with stirring until homogeneous, wherein the stirring kettle had a temperature of from 40°C to 60°C, then slowly raising the temperature to 120°C to continue the reaction, and lowering the temperature to 50°C after the reaction is complete;
(2) adding acetone, modified polysiloxane (Anhui Aiyota, IOTA2031), triallyl isocyanurate (TAIC), zinc oxide, and a second additive (e.g., 0.5 parts to 2 parts of a thickener, 5 parts to 20 parts of a film-forming agent, 0.1 parts to 2 parts of a wetting agent, and 0.3 parts to 5 parts of slipperiness agent) with further stirring, and allowing it to react fully;
(3) adding a solvent to adjust viscosity of the system, thereby obtaining the polyurethane slurry after the reaction is sufficiently complete.

### Comparative Example 3

This comparative example was the same as that in Example 13 with the differences in the polyol as raw material components of the polyurethane layer, wherein the contents of the raw material components and radiation doses were shown in Table 4.

The slurry for the polyurethane layer was prepared by the steps of:
(1) adding toluene cyclohexane-1,4-diisocyanate (Hubei Jinleda Chemical Co., Ltd., CHDI) and polyhexanediol to a stirring kettle with stirring until homogeneous, wherein the stirring kettle had a temperature of from 40°C to 60°C, then slowly raising the temperature to 120°C to continue the reaction, and lowering the temperature to 50°C after the reaction is complete;
(2) adding acetone, modified polysiloxane (Anhui Aiyota, IOTA2031), triallyl isocyanurate (TAIC), zinc oxide, and a second additive (e.g., 0.5 parts to 2 parts of a thickener, 5 parts to 20 parts of a film-forming agent, 0.1 parts to 2 parts of a wetting agent, and 0.3 parts to 5 parts of slipperiness agent) with further stirring, and allowing it to react fully;
(3) adding a solvent to adjust viscosity of the system, thereby obtaining the polyurethane slurry after the reaction is sufficiently complete.

### Comparative Example 4

This comparative example was the same as that in Example 11 with the differences in the radiation dose, wherein the contents of the raw material components and radiation doses were shown in Table 4.

**Table 4**

| | Isocyanate | polyol | co-cross- linking agent | cross-linking promoter | silicone | Radiation dose |
|---|---|---|---|---|---|---|
| Example 9 | 68 parts | 32 parts | 1 parts | 0.1 parts | 1 parts | 200KGy |
| Example 10 | 50 parts | 50 parts | 0. 5 parts | 0.15 parts | 4 parts | 25KGy |
| Example 11 | 47 parts | 53 parts | 2 parts | 0.2 parts | 8 parts | 50KGy |
| Example 12 | 10 parts | 90 parts | 0. 1 parts | 0.1 parts | 6 parts | 100KGy |
| Example 13 | 58 parts | 42 parts | 1 parts | 0.15 parts | 10 parts | 150KGy |
| Comparative Example 3 | 58 parts | 42 parts | 1 parts | 0.15 parts | 10 parts | 150KGy |
| Comparative Example 4 | 47 parts | 53 parts | 2 parts | 0.2 parts | 8 parts | 0KGy |

### Test for Graffiti resistance

The artificial leather samples with a polyurethane coating were tested for graffiti resistance. The results were shown in Table 5, and the tests were carried out according to the following methods as follows:

Graffiti resistance test method: under the condition of 20°C, 50% humidity, ordinary oil-based marker was used to write the mark "#" on the leather coating, and then after the mark was dry, dry cotton cloth was used to wipe the mark, and the result was recorded after wiping.

**Table 5**

| | Marks after wiping | Color residue after wiping |
|---|---|---|
| Example 9 | No marks | No obvious residue |
| Example 10 | No marks | No obvious residue |
| Example 11 | No marks | No obvious residue |
| Example 12 | No marks | No obvious residue |
| Example 13 | No marks | No obvious residue |
| Comparative Example 3 | With marks | Obvious residue |
| Comparative Example 4 | With marks | Obvious residue |

It can be shown from the data in Table 5 that the polyurethane coating of the present application enables the artificial leather product to have a better graffiti resistance.

### Example 14

In this example, a polyolefin elastomer bonding layer was disposed between the substrate layer and the polyolefin elastomer composite layer on the basis of Example 1, and the method of manufacturing the bonding layer comprises:
mixing an ethylene-α olefin copolymer elastomer, a grafted polyolefin elastomer with a grafting group of glycidyl methacrylate (GMA), and a C5 petroleum resin at a ratio in Table 6, and then forming the polyolefin elastomer bonding layer, the foamed layer, and the modification layer with the resulting mixture, the raw material components of the foamed layer and the raw material components of the modified layer, respectively, by co-extruding, and stacking them on a surface of the substrate layer.

The content of the raw material components of the polyolefin elastomer bonding layer and the radiation dose for radiation cross-linking were shown in Table 6.

### Example 15

This example was the same as that in Example 14 with the differences in the content of the raw material components of the polyolefin elastomer bonding layer and the radiation dose for radiation cross-linking, as shown in Table 6, wherein the second tackifying resin was rosin.

### Example 16

This example was the same as that in Example 14 with the differences in the content of the raw material components of the polyolefin elastomer bonding layer and the radiation dose for radiation cross-linking, as shown in Table 6, wherein the grafting group of the grafted polyolefin elastomer was methyl acrylate (MA) and the second tackifying resin was terpene resin (T100).

### Example 17

This example was the same as that in Example 14 with the differences in the content of the raw material components of the polyolefin elastomer bonding layer and the radiation dose for radiation cross-linking, as shown in Table 6, wherein the grafting group of the grafted polyolefin elastomer was acrylic acid (AA) and the second tackifying resin was C5 petroleum resin.

### Example 18

This example was the same as that in Example 14 with the differences in the content of the raw material components of the polyolefin elastomer bonding layer and the radiation dose for radiation cross-linking, as shown in Table 6, wherein the grafting group of the grafted polyolefin elastomer was glycidyl methacrylate (GMA) and the second tackifying resin was rosin.

### Example 19

This example was the same as that in Example 14 with the differences in the content of the raw material components of the polyolefin elastomer bonding layer and the radiation dose for radiation cross-linking, as shown in Table 6, wherein the grafting group of the grafted polyolefin elastomer was maleic anhydride (MAH), and the second tackifying resin was terpene resin (T100).

### Example 20

This example was the same as that in Example 19 with the differences in that the second tackifying resin was terpene resin (T90) and the radiation dose was 50 KGy.

### Example 21

This example was the same as that in Example 19 with the differences in that the radiation dose was 50 KGy.

### Example 22

This example was the same as that in Example 19 with the differences in that the tackifying resin was terpene resin (T110).

### Example 23

This example was the same as that in Example 19 with the differences in that the tackifying resin was terpene resin (T120).

### Example 24

This example was the same as that in Example 19 with the differences in that the tackifying resin was Sarin resin.

### Comparative Example 5

This comparative example was the same as that in Example 19 with the differences in the content of the raw material components of the polyolefin elastomer bonding layer and the radiation dose for radiation cross-linking, as shown in Table 6.

### Comparative Example 6

This comparative example was the same as that in Example 19 with the differences in the content of the raw material components of the polyolefin elastomer bonding layer and the radiation dose for radiation cross-linking, as shown in Table 6.

**Table 6**

| | Third polyolefin elastomer | Grafted polyolefin elastomer | Second tackifying resin | Third co-cross-linking agent | Radiation dose/KGy |
|---|---|---|---|---|---|
| Example 14 | 100 parts | 0 parts | 0.5 parts | 1.0 parts | 5 |
| Example 15 | 0 parts | 100 parts | 40 parts | 10 parts | 5 |
| Example 16 | 60 parts | 40 parts | 20 parts | 2 parts | 200 |
| Example 17 | 80 parts | 20 parts | 4 parts | 8 parts | 100 |
| Example 18 | 80 parts | 20 parts | 4 parts | 8 parts | 100 |
| Example 19 | 80 parts | 20 parts | 4 parts | 8 parts | 100 |
| Example 20 | 90 parts | 10 parts | 10 parts | 4 parts | 50 |
| Example 21 | 90 parts | 10 parts | 10 parts | 4 parts | 50 |
| Example 22 | 90 parts | 10 parts | 10 parts | 4 parts | 50 |
| Example 23 | 90 parts | 10 parts | 10 parts | 4 parts | 50 |
| Example 24 | 90 parts | 10 parts | 10 parts | 4 parts | 50 |
| Comparative Example 5 | 100 parts | 0 parts | 0 parts | 0 parts | 0 |
| Comparative Example 6 | 100 parts | 0 parts | 0 parts | 0.5 parts | 50 |

The cross-linking degree of the polyolefin elastomer bonding layer and the interlayer peel strength of the polyolefin elastomer bonding layer and the substrate layer in the artificial leather produced in Examples 14-24 and Comparative Examples 5-6 were tested. The results of the tests were as shown in Table 7, in which the cross-linking degree of the polyolefin elastomer bonding layer was tested in accordance with the xylene extraction method of GB/T 29848-2018-5.5.3, and the interlayer peel strength was tested in accordance with GB/T14905-2009.

**Table 7**

| | Cross-linking degree (%) | Interlayer peel strength (N/cm) |
|---|---|---|
| Example 14 | 1 | 5.1 |
| Example 15 | 3 | 15.6 |
| Example 16 | 90 | 8.8 |
| Example 17 | 79 | 8.5 |
| Example 18 | 73 | 8.9 |
| Example 19 | 78 | 9.2 |
| Example 20 | 51 | 9.5 |
| Example 21 | 54 | 10.7 |
| Example 22 | 52 | 9.2 |
| Example 23 | 51 | 8.5 |
| Example 24 | 55 | 12.5 |
| Comparative Example 5 | No cross-linking | 3.4 |
| Comparative Example 6 | 23 | 4.3 |

As can be seen from the results in Table 7, a polyolefin elastomer bonding layer is disposed between the polyolefin elastomer composite layer and the substrate layer, and after being subjected to a radiation cross-linking treatment, the polyolefin elastomer bonding layer can enhance the adhesion between the polyolefin elastomer composite layer and the substrate layer.

Finally, it should be noted that the above examples are only used to illustrate embodiments of the present invention, not to limit the embodiments; although the present invention has been described in detail with reference to the foregoing examples, a person of ordinary skill in the art should understand that it is still possible to modify the examples recorded in the foregoing embodiments or to replace some or all of the technical features therein with equivalent ones; and these modifications or replacements do not take the essence of the corresponding embodiments out of the scope of the embodiments of the present invention.

## Claims

1. An artificial leather comprising:
a substrate layer;
a polyolefin elastomer composite layer, provided on a surface of the substrate layer, and comprising at least one foamed layer and at least one modification layer, the polyolefin elastomer composite layer being radiation cross-linked; and
a polyurethane resin solution layer, provided on a surface of the polyolefin elastomer composite layer away from the substrate layer.

2. The artificial leather as claimed in claim 1, wherein the foamed layer has a cross-linking degree of 15%-90%.

3. The artificial leather as claimed in claim 1 or 2, wherein the foamed layer has raw material components including, by weight,
100 parts of a first polyolefin elastomer;
1 part to 15 parts of a blowing agent;
0 parts to 100 parts, preferably 50 parts to 100 parts of a first rubber elastomer;
0 parts to 10 parts, preferably 2 parts to 10 parts of a blowing promoter; and
a first additive and a first filler, wherein the first additive comprises 0.05 parts to 20 parts of a first cross-linking aid.

4. The artificial leather as claimed in any one of claims 1 to 2, wherein the modification layer has raw material components including, by weight,
100 parts of a second polyolefin elastomer;
0 parts to 100 parts, preferably 50 parts to 100 parts of a second rubber elastomer; and
0 parts to 10 parts, preferably 6 parts to 10 parts of a first tackifying resin.

5. The artificial leather as claimed in claim 3 or 4, wherein the first polyolefin elastomer and the second polyolefin elastomer have a melting point of 96°C or less;
the first polyolefin elastomer and the second polyolefin elastomer have a Shore A hardness of below 91.

6. The artificial leather as claimed in claim 3 or 4, wherein the first polyolefin elastomer and the second polyolefin elastomer are at least one selected from polyethylene, a copolymer of ethylene and alpha olefin, polypropylene, and a copolymer of propylene and alpha olefin.

7. The artificial leather as claimed in claim 3 or 4, wherein the first rubber elastomer and the second rubber elastomer each are at least one selected from natural rubber, binary ethylene-propylene rubber, trinary ethylene propylene rubber, styrene-butadiene-styrene block copolymer, styrene-isoprene-styrene block copolymer, cis-butadiene rubber, styrene-butadiene rubber, hydrogenated styrene-butadiene-styrene block copolymer, and hydrogenated styrene-isoprene- styrene block copolymer.

8. The artificial leather as claimed in claim 1, wherein the polyurethane resin solution layer is a solvent-borne, aqueous or solvent-free polyurethane coating.

9. The artificial leather as claimed in claim 8, wherein the polyurethane coating has raw material components including, by weight,
100 parts of a polyurethane resin solution;
1 part to 10 parts of silicone; and
0.2 parts to 2.2 parts of a second cross-linking aid; and
a second additive, wherein the second additive comprises a chain extender, a thickener, a film-forming agent, a slip agent, a wetting agent, or a combination thereof.

10. The artificial leather as claimed in claim 9, wherein the polyurethane resin solution is obtained by carrying out a polymerization reaction of a polyisocyanate and a polyol as raw materials, wherein the polyol comprises at least one of a polyol, a polyol polyoxyalkyl ether, or a polyol ester having a hydroxyl group as a terminal group, and wherein the hydroxyl group on the terminal group of the polyol is attached with carbon atoms of more than 6.

11. The artificial leather as claimed in claim 9, wherein the silicone has one of an epoxy group, an alkenyl group, or an acrylate group as its terminal group.

12. The artificial leather as claimed in claim 9, wherein the second cross-linking aid comprises a second co-cross-linking agent and a cross-linking promoter, optionally the second co-cross-linking agent is a compound containing a plurality of functionalities, and the cross-linking promoter comprises at least one of an organotin and a metal oxide.

13. The artificial leather as claimed in claim 12, wherein the second co-cross-linking agent is at least one selected from diallylamine, diallyl sulfide, N,N-methylenebisacrylamide, ethylene glycol dimethacrylate, triallylcyanurate, triallylisocyanurate, trimethylolpropane trimethacrylate, tetrahydroxymethylmethane tetracrylate.

14. The artificial leather as claimed in claim 1, wherein the substrate layer is fabric or paper.

15. The artificial leather as claimed in claim 14, wherein the fabric is at least one selected from pile fabrics, flat fabrics, polyester fabrics, nylon fabrics, microfiber base fabrics, stretch fabrics, and nonwoven fabrics.

16. The artificial leather as claimed in claim 1, wherein the artificial leather has a total thickness of 0.21 mm to 13.1 mm;
wherein the substrate layer has a thickness of 0.1 mm to 6.0 mm;
the polyolefin elastomer composite layer has a thickness of 0.1 mm to 7.0 mm; and
the polyurethane resin solution layer has a thickness of 0.01 mm to 0.10 mm.

17. The artificial leather as claimed in claim 1, further comprising:
a polyolefin elastomer bonding layer, provided between the polyolefin elastomer composite layer and the substrate layer, the polyolefin elastomer bonding layer being radiation cross-linked.

18. The artificial leather as claimed in claim 17, wherein the polyolefin elastomer bonding layer has a cross-linking degree of 1% to 90%.

19. The artificial leather as claimed in claim 17, wherein the polyolefin elastomer bonding layer has raw material components including, by weight:
0 parts to 100 parts, preferably 60 parts to 100 parts of a third polyolefin elastomer;
0 parts to 100 parts, preferably 10 parts to 100 parts of a graft-modified polyolefin elastomer, wherein a sum of parts by weight of the third polyolefin elastomer and parts by weight of the graft-modified polyolefin elastomer is 100 parts;
0.5 parts to 40 parts of a second tackifying resin;
1 part to 10 parts of a third cross-linking aid; and
a second filler.

20. The artificial leather as claimed in claim 19, wherein the graft-modified polyolefin elastomer is grafted with a (meth)acrylate salt.

21. The artificial leather as claimed in claim 20, wherein the (meth)acrylate salt is at least one selected from sodium (meth)acrylate, lithium (meth)acrylate, and zinc (meth)acrylate.

22. The artificial leather as claimed in claim 19 or 20, wherein the graft-modified polyolefin elastomer is further grafted with at least one selected from acrylic acid, maleic anhydride, glycidyl methacrylate, methyl acrylate, methyl methacrylate, butyl acrylate, and (meth)acrylic acid monomer.

23. The artificial leather as claimed in claim 4 or claim 19, wherein the first tackifying resin and the second tackifying resin each comprise at least one of rosin and its derivatives, terpene resins, polymeric resins, dicyclopentadiene and condensation resins.

24. The artificial leather as claimed in claim 23, wherein the first tackifying resin and the second tackifying resin have a softening point of ≤ 120°C.

25. The artificial leather as claimed in claim 1, wherein the artificial leather has a cross-linking degree of 20% to 90%.

26. A method of manufacturing an artificial leather comprising:
providing a polyolefin elastomer composite layer on a surface of a substrate layer, the polyolefin elastomer composite layer comprising at least one foamed layer and at least one modification layer;
providing a polyurethane resin solution layer on a surface of the polyolefin elastomer composite layer away from the substrate layer, and then performing embossing and radiation cross-linking treatment, thereby obtaining the artificial leather.

27. The method as claimed in claim 26, wherein the providing a polyolefin elastomer composite layer on a surface of a substrate layer comprises:
providing the substrate layer;
mixing raw material components of the foamed layer and raw material components of the modification layer, respectively, and forming a foaming film and the modification layer through co-extrusion;
stacking the foaming film and the modification layer respectively to the surface of the substrate layer;
subjecting the foaming film on the surface of the substrate layer to a foaming treatment, thereby forming the polyolefin elastomer composite layer on the surface of the substrate layer.

28. The method as claimed in claim 26, wherein the providing a polyolefin elastomer composite layer on a surface of a substrate layer comprises:
providing a polyolefin elastomer bonding layer on the surface of the substrate layer; and
providing the polyolefin elastomer composite layer on the surface of the polyolefin elastomer bonding layer away from the substrate layer.

29. The method as claimed in any one of claims 26 to 28, wherein the radiation cross-linking is carried out by means of alpha rays, beta rays, gamma rays, X-rays or neutron rays.
